# FASCICULE DE BREVET EUROPEEN

(11) **EP 0 863 961 B1**
(45) Date de publication et mention de la délivrance du brevet: **19.01.2005**
(21) Numéro de dépôt: 96939984.9
(22) Date de dépôt: 27.11.1996
(51) Int. Cl.: C09K 17/08, C09K 17/06

(54) **PROCEDE POUR TRAITER DES SOLS ET/OU DES MATERIAUX D'APPORT**
VERFAHREN ZUR BEHANDLUNG VON BÖDEN UND/ODER SCHÜTTGÜTERN
METHOD FOR TREATING SOIL AND/OR BORROW MATERIAL

(30) Priorité: 29.11.1995 FR 9514145
(43) Date de publication de la demande: 16.09.1998
(73) Titulaire: Fibac, 38100 Grenoble (FR)
(72) Inventeur: JOLY, Claude, F-38240 Meylan (FR)
(74) Mandataire: Hammond, William
(86) Numéro de dépôt international: PCT/FR1996/001874
(87) Numéro de publication internationale: WO 1997/020012

(56) Documents cités:
- EP-A- 0 178 213
- WO-A-94/06884
- FR-A- 2 453 837
- US-A- 4 871 283
- PATENT ABSTRACTS OF JAPAN vol. 014, no. 539 (C-0782), 28 Novembre 1990 & JP,A,02 225590 (MASUKAWA KENSETSU KK;OTHERS: 01), 7 Septembre 1990,
- DATABASE WPI Section Ch, Week 8340 Derwent Publications Ltd., London, GB; Class L02, AN 83-780597 XP002009727 & JP,A,58 145 654 (TAKI KAGAKU KK) , 30 Août 1983

## Description

La présente invention est relative au traitement des sols et/ou des matériaux d'apport de toute nature en vue d'en empêcher le gonflement par formation d'ettringite.

Il a été constaté que certains sols et matériaux d'apport gonflaient en présence d'eau, entraînant par là-même leur destruction ou une déstabilisation. Il a été démontré que ces gonflements étaient dus à la formation d'ettringite ou de thaumasite. En particulier, l'ettringite a la propriété de gonfler en présence d'eau : il a été observé que la variation du volume du minéral était de l'ordre de 30 %.

Lorsque l'ettringite se forme dans un sol ou dans un matériau d'apport, celui-ci est rendu beaucoup moins stable : il y a ainsi des risques d'éboulement et/ou de glissement de terrain. S'il s'agit d'un sol traité et/ou de matériaux d'apport pour la construction de route, de remblais, couche de forme, de plates-formes, etc..., le revêtement de celle-ci peut alors présenter des fissures, crevasses et/ou des dénivellations préjudiciables au roulement de véhicules.

Aussi un des buts de la présente invention est-il de traiter des sols et/ou des matériaux d'apport afin que de l'ettringite ne puisse se former.

Ce traitement est simple, fiable et peu coûteux.

Un but supplémentaire de la présente invention est de permettre la réutilisation des composés soufrés ou des produits en contenant d'origine industrielle tels que les gypses, les cendres volantes sulfo-calciques provenant notamment des centrales thermiques, les mâchefers d'incinération.

Ces buts, ainsi que d'autres qui apparaîtront par la suite, sont atteints par l'utilisation dans le traitement des sols ou des matériaux d'apport de toute nature d'un mélange de chaux éteinte et d'hydroxyde d'aluminium utilisés dans un rapport pondéral compris entre 1 et 10, ledit mélange comportant optionnellement un liant, pour éviter le gonflement des sols ou des matériaux d'apport par la formation d'ettringite.

Avantageusement, le rapport pondéral chaux éteinte sur hydroxyde d'aluminium est compris entre 3 et 5.

De préférence, le liant est choisi notamment parmi les laitiers, les pouzzolanes, les cendres volantes et les fumées de silice.

Le liant constitue avantageusement au moins 10 % en poids du mélange.

De préférence, le mélange est ajouté au sol ou matériau d'apport à raison de 0,2 à 10 % en poids.

Il a été en effet démontré par la Demanderesse qu'une adjonction d'un mélange de chaux éteinte, Ca(OH)2 et d'hydroxyde d'aluminium, Al(HO)3, permettait d'éviter un gonflement des sols ainsi que des matériaux d'apport. On a regroupé dans le tableau I ci-dessous un certain nombre de formulations de ce mélange qui comprend un liant choisi parmi les laitiers, les pouzzolanes, les cendres volantes et les fumées de silice, les pourcentages indiqués étant en poids.

Le sol étudié est une terre noire comprenant environ 2,08 % en poids de soufre exprimée en SO₃. Il est dit gonflant à court terme par absorption d'eau et à long terme par formation d'ettringite. Le pH de ce sol est d'environ 6,5.

**Tableau I**

| **TYPE DE TRAITEMENT (% en poids)** | **OBSERVATION Après 60 jours (1)** | **DE L'ETTRINGITE Après 150 jours (2)** |
|---|---|---|
| 3 % Ca (OH)₂ +1,65 % Al (OH)₃ + 3 % laitier | ettringite non détectée mono sulfo aluminate de calcium | |
| 3% Ca(OH)₂ + 1,65 % Al (OH)₃ + 3 % ciment | amas de monosulfo aluminate de calcium gibbsite/portlandite | |
| 3 % Ca (OH)₂ + 1,65 % Al (OH)₃ + 3 % laitier | | monosulfo aluminate de calcium gibbsite : Al(OH)3 |
| 3 % Ca(OH)₂ + 1,65 % Al (OH)₃ + 3% ciment | | monosulfo aluminate de calcium abondant gibbsite : Al(OH)₃ calcite |
| | (1) conservation à 20°C et 70 % d'humidité | (2) conservation 20°C et 100 % humidité de 60 jours à 150 jours |

Ainsi qu'on pourra le remarquer l'adjonction des mélanges tels que définis dans la revendication 1 permet d'éviter la formation d'ettringite. La gibbsite détectée se comporte comme l'hydroxyde d'aluminium. Aucun gonflement n'est donc observé.

Une première explication possible de l'action de ce mélange serait qu'il permettrait d'obtenir un rapport alumine sur sulfates égal ou supérieur à 1. D'après des études conduites par la Demanderesse, la formation d'ettringite, C₃(A.F.)₃ Ca SO₄, 32H₂O se produirait lorsque ce rapport molaire alumine sur sulfates [Al₂O₃/SO⁻²₄] serait inférieur à 1. De plus, pour que l'ettringite se forme, il faudrait que le pH du sol soit supérieur à 10,5.

Or l'adjonction d'un mélange tel que défini dans la revendication 1 aurait pour résultat de rendre le rapport molaire alumine sur sulfates toujours supérieur ou égal à 1 et de rendre impossible la formation d'ettringite quelque soit le pH du sol ou du matériau d'apport.

## Revendications

1. Utilisation dans le traitement des sols ou des matériaux d'apport de toute nature qui gonflent en présence d'eau suite à la formation d'ettringite d'un mélange de chaux éteinte et d'hydroxyde d'aluminium utilisés dans un rapport pondéral compris entre 1 et 10, ledit mélange comportant optionnellement un liant, pour éviter dans lesdits sols ou matériaux d'apport la formation d'ettringite.

2. Utilisation selon la revendication 1, **caractérisée par le fait que** le rapport pondéral chaux éteinte sur hydroxyde d'aluminium est compris entre 3 et 5.

3. Utilisation selon la revendication 1, **caractérisée par le fait que** le liant est choisi notamment parmi les laitiers, les pouzzolanes, les cendres volantes et les fumées de silice.

4. Utilisation selon la revendication 3, **caractérisée par le fait que** le liant constitue au moins 10 % en poids du mélange.

5. Utilisation selon l'une des revendications 1 à 4, **caractérisée par le fait que** le mélange est ajouté au sol ou matériau d'apport à raison de 0,2 à 10 % en poids.

## Claims

1. Use in the treatment of any type of soil or filler materials which swell in the presence of water following the formation of ettringite, of a mixture of slaked lime and aluminium hydroxide used in a weight ratio of between 1 and 10, said mixture optionally comprising a binding agent, to avoid the formation of ettringite in said soil or filler materials.

2. Use according to claim 1, **characterised by** the fact that the weight ratio of slaked lime to aluminium hydroxide is between 3 and 5.

3. Use according to claim 1, **characterised by** the fact that the binding agent is selected, in particular, from slag, pozzuolana, fly ash and silica fumes.

4. Use according to claim 3, **characterised by** the fact that the binding agent constitutes at least 10% by weight of the mixture.

5. Use according to any one of claims 1 to 4, **characterised by** the fact that the mixture is added to the soil or filler material in a ratio of 0.2 to 10% by weight.

## Patentansprüche

1. Verwendung eines Gemisches aus gelöschtem Kalk und Aluminiumhydroxid in einem Gewichtsverhältnis von 1 bis 10, wobei das Gemisch gegebenenfalls ein Bindemittel enthält, bei der Behandlung von Erden oder Aufschüttmaterialien beliebiger Art, die in Gegenwart von Wasser aufgrund der Bildung von Ettringit quellen, um in den Erden und Aufschüttmaterialien die Bildung von Ettringit zu vermeiden.

2. Verwendung nach Anspruch 1, **dadurch gekennzeichnet, dass** das Gewichtsverhältnis von gelöschtem Kalk zu Aluminiumhydroxid 3 bis 5 beträgt.

3. Verwendung nach Anspruch 1, **dadurch gekennzeichnet, dass** das Bindemittel insbesondere unter Schlacken, Puzzolanen, Flugaschen und Quarzstaubprodukten ausgewählt ist.

4. Verwendung nach Anspruch 3, **dadurch gekennzeichnet, dass** das Bindemittel mindestens 10 Gew.-% des Gemisches ausmacht.

5. Verwendung nach einem der Ansprüche 1 bis 4, **dadurch gekennzeichnet, dass** das Gemisch einer Erde oder einem Aufschüttmaterial in einem Anteil von 0,2 bis 10 Gew.-% zugesetzt wird.
